Europäisches Patentamt

**European Patent Office**

Office européen des brevets

(19)

(11) Numéro de publication: **0 223 664**
**B1**

(12) **FASCICULE DE BREVET EUROPEEN**

(45) Date de publication du fascicule du brevet:
19.07.89

(21) Numéro de dépôt: 86402313.0

(22) Date de dépôt: 15.10.86

(51) Int. Cl.⁴: **D03D 15/12, B64C 1/00,**
**B64C 1/40**

(54) **Tissu à base de fibres de verre et de carbone et articles comprenant un tel tissu.**

(30) Priorité: 16.10.85 FR 8515328

(43) Date de publication de la demande:
27.05.87 Bulletin 87/22

(45) Mention de la délivrance du brevet:
19.07.89 Bulletin 89/29

(84) Etats contractants désignés:
AT BE CH DE ES FR GB GR IT LI NL SE

(56) Documents cités:
WO-A-84/04727
AU-A- 61 662
DE-A- 3 322 581
FR-A- 2 034 787

PRODUCTS ENGINEERING,
vol. 48, no. 3, mars 1977, pages 34-36, Morgan-Grampian
Publishing Corp., New York, US; "Composite experts
mix fibers to cut costs and boost properties"

(73) Titulaire: BROCHIER S.A., 33 Avenue Franklin Roosevelt
B.P. 272, F-69152 Décines Charpieu Cédex(FR)

(72) Inventeur: Auduc, Hervé, 4 Allée Charles Peguy,
F-69330 Jonage(FR)
Inventeur: Aucagne, Jean, Pierre Blanche Rochetoirin,
F-38110 La Tour du Pin(FR)

(74) Mandataire: Phélip, Bruno et al, c/o Cabinet Harlé &
Phélip 21, rue de La Rochefoucauld, F-75009 Paris(FR)

EP 0 223 664 B1

## Description

L'invention appartient au domaine des tissus dits techniques, c'est-à-dire des tissus dont les applications sont essentiellement industrielles. L'invention a plus particulièrement pour objet un tissu à base de fibres de verre et de carbone possédant un ensemble de propriétés remarquables, notamment une haute résistance au feu, un faible poids par unité de surface et une bonne tenue mécanique. L'invention concerne également les articles comprenant un tel tissu, par exemple les articles obtenus par imprégnation de ces tissus à l'aide d'une résine, éventuellement en combinaison avec d'autres constituants, en réalisant ainsi des structures ayant des domaines d'application très divers, par exemple dans l'industrie aéronautique.

A l'heure actuelle, on se préoccupe de plus en plus de trouver de nouveaux matériaux légers, résistants et ininflammables. Les problèmes techniques sont particulièrement cruciaux pour l'aménagement intérieur des aéronefs, tels que les avions. On doit malheureusement constater que la plupart des matériaux utilisés ne sont pas capables de satisfaire à toutes les exigences. Lors d'un incendie, certains d'entre eux produisent des fumées toxiques. D'autres donnent naissance à des points d'incandescence, à des braises, ou laissent tomber des gouttes qui propagent le feu. Il en est ainsi des articles en résine ABS (acrylonitrile-butadiène-styrène) et même des articles contenant des fibres d'aramide imprégnées de résine phénolique. Ces derniers sont largement utilisés pour l'aménagement intérieur des avions, en raison de leur faible poids unitaire et de leur bonne résistance mécanique d'ensemble. Ils sont préférés aux articles à base de fibres de verre imprégnées de résine phénolique, dont la masse est de 20 à 30 % supérieure pour les mêmes fonctions. Cependant, les matériaux composites fibres d'aramide-résine phénolique ne possèdent pas un comportement au feu pleinement satisfaisant. Pour satisfaire à une telle exigence, on ne peut pas non plus se tourner vers les matières thermo-formables telles que les résines ABS ou à base de polycarbonates.

Il existe donc un besoin impératif, pour la sécurité des transports aériens, à mettre au point des matériaux pleinement satisfaisants. La présente invention a pour but d'apporter une solution à ce problème.

L'invention a donc pour objet un tissu à base de fibres, comprenant un mélange de

(a) 50-90 % en poids environ de fibres de verre texturées
(b) 10-50 % en poids environ de fibres de carbone.

Un tel tissu convient bien, par imprégnation avec des résines usuelles, avantageusement des résines phénoliques, pour la réalisation d'articles, tels que des pièces pour l'aménagement intérieur des avions, qui doivent remplir simultanément un certain nombre d'exigences. Le tissu selon l'invention est conçu pour permettre une imprégnation excellente par la résine, ce qui permet d'obtenir des structures variées, par exemple à nids d'abeille, du genre généralement employé pour l'aménagement intérieur des avions.

Le premier constituant du tissu selon l'invention consiste en des fibres de verre texturées. L'expression "texturé" au sens de la présente description désigne une fibre de verre dont l'alignement de chaque filament est aléatoire. Dans la technique d'obtention des fibres de verre, on parle également de fibres de verre effilochées. Ce type de fibres est connu de l'homme du métier, et peut être obtenu de manière connue par divers traitements. Les fibres de verre texturées mises en oeuvre dans le tissu selon l'invention sont continues ou discontinues. On préfère en général les fibres continues qui procurent les meilleurs résultats lors de l'ensimage. Dans l'application prévue par l'invention, les fibres de verre texturées présentent de nombreux avantages par rapport aux fibres de verre non texturées :
- les fibres de verre texturées permettent d'obtenir des articles présentant un meilleur état de surface, car elles possèdent une capacité d'absorption de résine nettement plus élevée que les fibres de verre non texturées (ou lisses) ; également, les fibres de verre texturées procurent un meilleur interface fibre/résine car elles réalisent une plus grande surface de contact avec la résine;
- les tissus et articles à base de fibres de verre texturées ont une masse surfacique plus faible, en raison de la structure "gonflée" desdites fibres;
- dans les tissus selon l'invention, en utilisant des fibres de verre texturées en mélange avec les fibres de carbone, on élimine l'effet néfaste de la différence de dilatation entre le carbone et le verre : en effet les fibres de verre texturées présentent un répartition aléatoire des filaments, qui est favorable à la compensation des dilatations; au contraire les fibres de verre non texturées mélangées aux fibres de carbone provoquent des voilages et déformations dans les articles finis;
- la drapabilité (ou déformabilité) des tissus à base de fibres de verre texturées est plus aisée.

L'invention, grâce au choix des fibres de verre texturées, satisfait aux besoins de l'industrie aéronautique. Les fibres de verre texturées ont un poids par unité de longueur qui peut varier dans d'assez larges limites, en particulier de 11 à 126 tex (1 tex représentant le nombre de grammes par kilomètre de fibre). On a obtenu de bons résultats avec des fibres de verre de 34 tex environ.

Le deuxième constituant du tissu selon l'invention consiste en des fibres de carbone. La dimension de celles-ci peut varier largement. On utilise le plus couramment des fibres de carbone de 1000 à 6000 filaments. On a obtenu de bons résultats avec des fibres de carbone de 3000 filaments environ.

Ainsi qu'on le montrera grâce à des exemples concrets, les articles fabriqués par imprégnation des tissus selon l'invention, ont un comportement au feu tout à fait satisfaisant, une faible masse, une résistance au choc et une raideur convenables ainsi qu'un bon aspect de surface.

Les proportions relatives des deux constituants du tissu selon l'invention seront choisies en fonction des problèmes précis à résoudre. Il con vient en effet d'adopter un compromis compte tenu des impératifs à respecter, quant à la masse unitaire et au prix notamment. Par conséquent, la quantité de fibres de verre texturées qui est en général de 50 à 90 % en poids environ, par rapport au poids total du tissu, est de préférence comprise entre 55 et 75 % en poids environ. De manière correspondante, la quantité de fibres de carbone qui est comprise en général entre 10 et 50 % en poids environ, par rapport au poids total du tissu, est de préférence comprise entre 25 et 45 % en poids.

Selon une caractéristique complémentaire, le tissu selon l'invention peut comprendre également une certaine proportion de fibres d'aramide ne dépassant pas 5 à 10 % en poids du poids total. Grâce à cette introduction de fibres d'aramide en faible quantité, le comportement au feu n'est pas détérioré, mais la résistance au cheminement des fissures est améliorée.

Ainsi qu'on l'a dit précédemment, le tissu selon l'invention se prête particulièrement bien à une imprégnation par une résine, en général une résine phénolique. Le taux d'imprégnation peut être élevé et, en général, il est de 30 à 60 %, en particulier de 50 à 60 %. La capacité élevée d'absorption de la résine par le tissu est favorable pour l'obtention d'un bon état de surface ainsi qu'au collage du tissu sur les structures habituellement utilisées qui sont en nids d'abeille.

La combinaison des fibres de verre texturées et des fibres de carbone offre des avantages décisifs. Tout d'abord la résistance au feu du tissu selon l'invention est absolue, car aussi bien les fibres de verre que les fibres de carbone sont totale ment inertes au feu. Cette caractéristique essentielle est à comparer au comportement au feu des fibres d'aramide, lesquelles, même imprégnées et stratifiées avec des résines phénoliques, ne satisfont plus aux normes exigées dans l'industrie aéronautique en raison des dégagements gazeux lors de la combustion, des points résiduels d'incandescence et de la pénétration rapide d'une flamme traversante (les exigences coupe-feu n'étant pas alors respectées).

La mise en oeuvre de fibres de verre texturées (orientation aléatoire des filaments) en combinaison avec des fibres de carbone permet aussi d'éviter un inconvénient constaté avec les fibres de verre alignées (ou silionnes), à savoir des distorsions dues au fait que les coefficients de dilatation thermique linéaire du verre et du carbone sont différents, ce coefficient étant de $5.10^{-6}$ pour le verre et voisin de 0 pour le carbone. Avec des fibres de verre non texturées, on constate des distorsions (voilage notamment) lors du refroidissement d'une pièce polymérisée à 130° ou 150°C.

Le tissu selon l'invention présente une masse surfacique unitaire qui peut être aussi faible que celle des tissus d'aramide traditionnels (par exemple de l'ordre de 170 g/m²). On obtient aussi des pièces de raideur supérieure, grâce au module d'élasticité élevé de la combinaison fibres de verre texturées/fibres de carbone.

Ainsi qu'on l'a mentionné ci-dessus, les tissus selon l'invention peuvent être utilisés pour la fabrication de pièces à structure alvéolaire. Cependant, dans certains cas, le tissu selon l'invention peut être mis en oeuvre directement, après imprégnation avec une résine phénolique sans qu'il soit nécessaire d'avoir recours à des structures sandwich de type nid d'abeille destinées à augmenter l'inertie de la structure. Dans de tels cas, on utilise alors des stratifiés comprenant plusieurs couches de tissu imprégné de résine, par exemple deux ou trois couches.

L'invention sera maintenant illustrée, sans être aucunement limitée, par les exemples ci-après.

## Exemple 1

Dans cet exemple, on a utilisé un mélange de base contenant 57 % en poids de fibres de verre texturées et 43 % en poids de fibres de carbone. Les fibres de verre "texturées" avaient les caractéristiques suivantes, telles que mesurées sur un stratifié à 12 couches avec 27 % de résine phénolique d'imprégnation :

| | |
|---|---|
| Résistance à la flexion | 405 MPa |
| Module de flexion | 23 000 MPa |
| Résistance au cisaillement | 35 MPa |
| Les dimensions des fibres étaient: | |
| Fibres de verre texturées | 34 tex |
| Fibres de carbone | 3000 filaments |

On a tissé à partir de ce mélange de fibres un tissu ayant une masse surfacique de 190 g/m².

Les caractéristiques mécaniques de ce tissu étaient les suivantes, telles que mesurées sur des échantillons stratifiés pour essais de laboratoire, comportant 12 couches de tissu imprégné :

3

| Résistance à la flexion | 389 MPa |
|---|---|
| Module de flexion | 31 900 MPa |
| Résistance au cisaillement | 36 MPa |

Le tissu ci-dessus avait été imprégné d'une résine phénolique modifiée (Vicotex 250 de Brochier S.A.) à un taux de 55 %.

Le tissu imprégné a été collé sur une structure en nid d'abeille et on a procédé à des essais normalisés sur l'article obtenu. Son comportement au feu a été caractérisé comme suit :
Norme FAR 25 : Passe
Aucun point d'ignition résiduel
Pas de dégagement apparent de fumée.

Exemple 2

Dans cet exemple, on a utilisé un mélange de base comprenant en poids, 67 % de fibres de verre texturées et 33 % de fibres de carbone. Les fibres étaient les mêmes que celles utilisées à l'Exemple 1. Les caractéristiques mécaniques du tissu, mesurées sur un stratifié à 12 couches étaient les suivantes :

| Résistance à la flexion | 400 MPa |
|---|---|
| Module de flexion | 31 000 MPa |
| Résistance au cisaillement | 36 MPa |

Le comportement au feu des articles en nid d'abeille fabriqués à partir de ce tissu, était aussi bon qu'à l'Exemple 1.

Exemple 3

Dans cet exemple on a utilisé un mélange de base comprenant 65 % de fibres de verre texturées, 30 % de fibres de carbone et 5 % de fibres d'aramide, ces dernières étant disponibles sur le marché sous la dénomination "KEVLAR" de la Société DU PONT DE NEMOURS. Les fibres de verre et de carbone étaient les mêmes qu'aux Exemples 1 et 2. On a obtenu un tissu ayant des caractéristiques similaires à celles des tissus des Exemples 1 et 2, avec une résistance élevée à la propagation des fissures.

Exemples 4 à 6

Dans ces exemples, on a utilisé divers tissus de fibres de verre texturées et de fibres de carbone afin d'illustrer l'influence des proportions relatives de ces fibres sur les propriétés physiques et mécaniques des articles stratifiés à 12 couches de tissu. Les fibres individuelles avaient les mêmes caractéristiques qu'aux Exemples 1 à 3.

On a ainsi utilisé les mélanges de fibres suivants :

|  | Ex. 4 | Ex. 5 | Ex. 6 |
|---|---|---|---|
| % de fibres de verre texturées | 90 | 80 | 50 |
| % de fibres de carbone | 10 | 20 | 50 |

On a constaté que les valeurs de la résistance à la flexion et de la contrainte de cisaillement étaient du même ordre de grandeur que pour les articles des Exemples 1 à 3.

Des différences importantes interviennent sur la masse du tissu et sur le module de flexion du stratifié.

Pour une épaisseur donnée du tissu, la masse augmente avec la proportion de fibres de verre. Ainsi le tissu de l'Exemple 4 est le plus lourd.

En ce qui concerne le module de flexion des stratifiés, on a trouvé les valeurs suivantes :

| Stratifié | Ex. 4 | Ex. 5 | Ex. 6 |
|---|---|---|---|
| Module de flexion (MPa) | 25 400 | 27 550 | 34 000 |

Les exemples qui précèdent montrent que l'homme du métier peut choisir les proportions de fibres de

4

verre texturées et de fibres de carbone en fonction des caractéristiques désirées des tissus et des articles imprégnés comportant de tels tissus.

Les produits selon l'invention satisfont aux normes les plus sévères et les plus récentes de l'industrie aéronautique, notamment la norme proposée par l'Administration fédérale de l'aviation (Federal Aviation Administration FAA) le 11 juillet 1985 sous la référence NPRM 85-10A. Cette norme définit des exigences accrues sur le comportement au feu des matériaux utilisés à l'intérieur des avions de transport. Les matériaux à base de fibres d'aramide imprégnées de résine phénolique ne peuvent satisfaire à cette norme. A poids égal (par exemple 175 g/m²) et avec les mêmes qualités mécaniques, les tissus selon l'invention permettent d'obtenir des panneaux en nids d'abeille imprégnés de résine phénolique et résistant parfaitement au feu.

Afin d'illustrer encore ces avantages, on a comparé les propriétés mécaniques d'un produit selon l'invention, conforme à l'Exemple 2 ci-dessus et d'un produit de masse égale, à base de fibres d'aramide, selon l'art antérieur. On a utilisé des stratifiés à 10 couches, d'une épaisseur de 2 mm à 34 % de résine phénolique. La masse de tissu support était de 175 g/m². Les résultats obtenus sont rassemblés dans le Tableau qui suit.

|  | Produit art antérieur | Produit Ex. 2 |
|---|---|---|
| Résistance à la flexion (MPa) | 220 | 470 |
| Module de flexion (MPa) | 20 000 | 26 000 |
| Résistance à la tension (MPa) | 500 | 300 |
| Module de tension (MPa) | 25 000 | 28 500 |
| Cisaillement induit (MPa) | 20 | 40 |
| Force de pelage N/75 mm | 100 | 120 |

Les résultats ci-dessus montrent que les propriétés mécaniques des produits selon l'invention sont au moins égales, et en général supérieures, à celles des produits de l'art antérieur à base de fibres d'aramide. On rappellera que le comportement au feu de ces dernières ne satisfait pas aux normes les plus sévères actuellement proposées, alors que les produits de l'invention remplissent parfaitement de telles exigences.

Les informations sur la structure et la technique de fabrication des articles du type nid d'abeille, tels qu'ils sont notamment utilisés dans l'industrie aéronautique pour l'aménagement intérieur des avions, sont connues de l'homme du métier. On peut à cet effet se référer à l'ouvrage intitulé Guide Pratique des matériaux composites (2ème édition), de M.Geier et D. DUEDAL Editions Lavoisier (France) (1985).

**Revendications**

1. Tissu à base de fibres, comprenant un mélange de:
a) 50-90% en poids environ de fibres de verres texturées
b) 10-50% en poids environ de fibres de carbone.
2. Tissu selon la revendication 1, caractérisé en ce qu'il comprend un mélange de
a) 55-75% en poids environ de fibres de verre texturées
b) 25-45% en poids environ de fibres de carbone.
3. Tissu selon l'une des revendications 1 ou 2, caractérisé en ce qu'il comprend également une proportion de fibres d'aramide ne dépassant pas 5 à 10% en poids du poids total.
4. Tissu selon l'une quelconque des revendications 1 à 3, caractérisé en ce que les fibres de verre texturées ont un poids par unité de longueur compris entre 11 et 126 tex, notamment de 34 tex.
5. Tissu selon l'une quelconque des revendications 1 à 4, caractérisé en ce que les fibres de carbone comprennent 1000 à 6000 filaments, notamment 3000 filaments.
6. Article comprenant un tissu selon l'une quelconque des revendications 1 à 5 imprégné avec une résine d'imprégnation.
7. Article selon la revendication 6, caractérisé en ce que la résine d'imprégnation est une résine phénolique.
8. Article selon l'une des revendications 6 ou 7, caractérisé en ce que le taux de résine est de 30 à 60% en poids, en particulier de 50 à 60% en poids, par rapport au poids de l'article.
9. Article selon l'une quelconque des revendications 6 à 8, caractérisé en ce qu'il appartient à la catégorie des panneaux à structure en nids d'abeille, le tissu selon l'une quelconque des revendications 1 à 5, étant collé sur l'une et/ou l'autre des deux faces de ladite structure.
10. Application des articles selon l'une quelconque des revendications 6 à 9 pour l'aménagement intérieur des aéronefs, en particulier des avions.

**Patentansprüche**

1. Gewebe aus Fasern mit einem Gemisch von
a) ungefähr 50 bis 90 Gew.-% von texturierten Glasfasern
b) ungefähr 10 bis 50 Gew.-% von Fasern aus Kohlenstoff.
2. Gewebe nach Anspruch 1, dadurch gekennzeichnet, daß es ein Gemisch von
a) ungefähr 55 bis 75 Gew.-% von texturierten Glasfasern
b) ungefähr 25 bis 45 Gew.-% von Fasern aus Kohlenstoff enthält.
3. Gewebe nach Anspruch 1 oder 2, dadurch gekennzeichnet, daß es auch einen Anteil an Aramidfasern enthält, der nicht mehr als 5 bis 10 Gew.-% des Gesamtgewichts beträgt.
4. Gewebe nach einem der Ansprüche 1 bis 3, dadurch gekennzeichnet, daß das Gewicht der texturierten Glasfasern pro Längeneinheit zwischen 11 und 126 tex liegt, insbesondere bei 34 tex.
5. Gewebe nach einem der Ansprüche 1 bis 4, dadurch gekennzeichnet, daß die Fasern aus Kohlenstoff 1000 bis 6000 Fäden enthalten, insbesondere 3000 Fäden.
6. Artikel mit einem Gewebe nach einem der Ansprüche 1 bis 5, der mit einem Imprägnierharz imprägniert ist.
7. Artikel nach Anspruch 6, dadurch gekennzeichnet, daß das Imprägnierharz ein Phenolharz ist.
8. Artikel nach einem der Ansprüche 6 oder 7, dadurch gekennzeichnet, daß der Anteil des Harzes 30 bis 60 Gew.-% beträgt, insbesondere 50 bis 60 Gew.-% in bezug auf das Gewicht des Artikels.
9. Artikel nach einem der Ansprüche 6 bis 8, dadurch gekennzeichnet, daß er eine Platte mit Wabenmusterstruktur ist, auf den das Gewebe nach einem der Ansprüche 1 bis 5 auf die eine und/oder andere Seite der Struktur aufgeklebt ist.
10. Verwendung des Artikels nach einem der Ansprüche 6 bis 9 für die Innenausstattung von Luftfahrzeugen, insbesondere von Flugzeugen.

**Claims**

1. A fiber-based fabric comprising a mixture of:
(a) about 50–90% by weight of textured glass fibers.
(b) about 10–50% by weight of carbon fibers.
2. The fabric as claimed in claim 1, comprising a mixture of:
(a) about 55–75% by weight of textured glass fibers.
(b) about 25–45% by weight of carbon fibers.
3. The fabric as claimed in one of claims 1 or 2, wherein it also comprises a proportion of aramide fibers not exceeding 5 to 10% by weight of the total weight.
4. The fabric as claimed in any one of claims 1 to 3, wherein the textured glass fibers have a weight per unit length of between 11 and 126 tex, in particular about 34 tex.
5. The fabric as claimed in any one of claims 1 to 4, wherein the carbon fibers comprise 1,000 to 6,000 filaments, in particular about 3,000 filaments.
6. An article comprising a fabric as claimed in any one of claims 1 to 5 impregnated with an impregnation resin.
7. The article as claimed in claim 6, wherein the impregnation resin is a phenolic resin.
8. The article as claimed in one of claims 6 or 7, wherein the proportion of resin is 30 to 60% by weight, in particular 50 to 60% by weight, in relation to the weight of the article.
9. The article as claimed in any one of claims 6 to 8, consisting of panels of honeycombed structure, the fabric as claimed in any one of claims 1 to 5 being bonded to one and/or other of the two faces of the said structure.
10. The articles as claimed in any one of claims 6 to 9 as used for fitting out the interior of aircraft, in particular airplanes.